# EUROPÄISCHE PATENTSCHRIFT

(11) **EP 2 943 832 B1**
(45) Veröffentlichungstag und Bekanntmachung des Hinweises auf die Patenterteilung: **24.08.2022**
(21) Anmeldenummer: 14700339.6
(22) Anmeldetag: 08.01.2014
(51) Int. Cl.: G02B 23/02, G02B 23/18, G02B 27/64

(54) **OPTISCHES SYSTEM ZUR ABBILDUNG EINES OBJEKTS UND VERFAHREN ZUM BETRIEB DES OPTISCHEN SYSTEMS**
OPTICAL SYSTEM FOR IMAGING AN OBJECT AND METHOD FOR OPERATING SAID OPTICAL SYSTEM
SYSTÈME OPTIQUE POUR FORMER UNE IMAGE D'UN OBJET ET PROCÉDÉ PERMETTANT DE FAIRE FONCTIONNER CE SYSTÈME OPTIQUE

(30) Priorität: 11.01.2013 DE 102013200325; 11.01.2013 US 201361751433 P
(43) Veröffentlichungstag der Anmeldung: 18.11.2015
(73) Patentinhaber: Carl Zeiss AG, 73447 Oberkochen (DE)
(72) Erfinder: BACH, Christian, 35418 Buseck (DE)
(74) Vertreter: Tongbhoyai, Martin
(86) Internationale Anmeldenummer: PCT/EP2014/050203
(87) Internationale Veröffentlichungsnummer: WO 2014/108429

(56) Entgegenhaltungen:
- AT-A1- 506 437
- DE-A1- 4 244 161
- US-A- 5 103 248
- US-A- 5 610 761
- US-A1- 2006 056 019

## Beschreibung

Die Erfindung betrifft ein optisches System zur Abbildung eines Objekts. Demnach ist das optische System zur Abbildung eines Objekts ausgebildet.

Das oben bezeichnete optische System wird in einem Fernglas eingesetzt. Beispielsweise sind optische Systeme in Form von Ferngläsern bekannt, die zwei Gehäuse in Form von zwei Tuben aufweisen. In einem ersten Tubus ist eine erste Abbildungseinheit angeordnet, die eine erste optische Achse aufweist. In einem zweiten Tubus ist eine zweite Abbildungseinheit angeordnet, die eine zweite optische Achse aufweist.

Darüber hinaus sind aus dem Stand der Technik Ferngläser bekannt, die ein erstes Gehäuse in Form eines ersten Tubus mit einer ersten optischen Achse und ein zweites Gehäuse in Form eines zweiten Tubus mit einer zweiten optischen Achse aufweisen. Das erste Gehäuse ist mit dem zweiten Gehäuse über eine Knickbrücke verbunden, wobei die Knickbrücke ein an dem ersten Gehäuse angeordnetes erstes Scharnierteil aufweist und wobei die Knickbrücke ein an dem zweiten Gehäuse angeordnetes zweites Scharnierteil aufweist. Die Knickbrücke weist eine Knickachse auf. Werden die beiden Gehäuse relativ zueinander um die Knickachse geschwenkt, verändert sich der Abstand der beiden Gehäuse zueinander.

Aus dem Stand der Technik sind optische Systeme bekannt, bei denen zum einen eine Fokussierung auf das abzubildende Objekt erfolgt und zum anderen eine Korrektur einer Fehlsichtigkeit eines Benutzers des optischen Systems erfolgt. Dies wird nachfolgend näher erläutert.

Die Einstellung der Fokussierung erfolgt bei dem Stand der Technik durch Verschieben sowohl einer ersten optischen Einheit (beispielsweise eines ersten Objektivs, eines ersten Okulars und/oder einer ersten separaten Fokussiereinheit) entlang einer ersten optischen Achse der ersten Abbildungseinheit als auch einer zweiten optischen Einheit (beispielsweise eines zweiten Objektivs, eines zweiten Okulars und/oder einer zweiten separaten Fokussiereinheit) entlang einer zweiten optischen Achse der zweiten Abbildungseinheit. Die Fokussierung erfolgt durch Rotation eines mechanischen Drehrades, welches am optischen System angeordnet ist und welches mechanisch die Rotation in Bewegungen der ersten optischen Einheit und der zweiten optischen Einheit umsetzt. Somit wird ein mechanisch vorgegebener Zusammenhang zwischen einem einstellbaren Rotationswinkel des Drehrades und einer Position der zur Fokussierung verwendeten optischen Einheiten verwendet. Dieser Zusammenhang ist bei den bekannten optischen Systemen stets fest vorgegeben. Somit erfolgt die Umsetzung der Rotation des Drehrades in die mechanische Bewegung der vorgenannten optischen Einheiten stets in einer festen vorgegebenen Weise.

Ist die Umsetzung derart gewählt, dass eine geringe Winkeländerung am Drehrad ausreichend ist, um eine Verschiebung der zur Fokussierung verwendeten optischen Einheiten zu bewirken, dann kann ein Benutzter zwar recht schnell eine Fokussierung auf ein sehr weit entferntes oder sehr nah angeordnetes Objekt vornehmen. Allerdings ist die Genauigkeit der Fokussierung recht begrenzt. Ist hingegen die Winkeländerung des Drehrads recht groß, die benötigt wird, um eine Verschiebung der zur Fokussierung verwendeten optischen Einheiten zu bewirken, ist zwar eine sehr genaue Einstellung der Fokussierung möglich. Jedoch muss der Benutzer das Drehrad sehr oft drehen, um von einem ersten Fokussierzustand in einen zweiten Fokussierzustand zu wechseln.

Die Korrektur der Fehlsichtigkeit der Augen eines Benutzers des optischen Systems erfolgt durch relative Verschiebung der im ersten Tubus angeordneten ersten optischen Einheit und der im zweiten Tubus angeordneten zweiten optischen Einheit, die beide auch für die Fokussierung verwendet werden. Somit werden für den ersten Tubus und den zweiten Tubus (also für die erste Abbildungseinheit und die zweite Abbildungseinheit) unterschiedliche Fokussierzustände eingestellt, sodass die Fehlsichtigkeit korrigiert wird. Dies wird beim Stand der Technik dadurch erzielt, dass ein zweites mechanisch ausgebildetes Drehrad die erste optische Einheit im ersten Tubus entlang der ersten optischen Achse bewegt, während die zweite optische Einheit im zweiten Tubus nicht bewegt wird. Auf diese Weise wird der relative Abstand der ersten optischen Einheit zur zweiten optischen Einheit eingestellt. Bei dem bekannten Stand der Technik erfolgt eine Fokussierung auf ein Objekt und eine Korrektur der Fehlsichtigkeit eines Benutzers dann durch die folgenden Schritte. Die bekannten optischen Systeme sehen vor, dass vorgegeben wird, für welchen Tubus (also auch für welches Auge eines Benutzers) die Korrektur der Fehlsichtigkeit vorgenommen wird. Es ist bekannt, dass ein Benutzer zunächst mit seinem linken Auge über ein erstes Drehrad eine Fokussierung vornimmt und anschließend mit dem rechten Auge über ein zweites Drehrad die Fehlsichtigkeit korrigiert. Die Qualität der vorgenannten Einstellungen hängt nun allerdings davon ab, ob die Einstellung der Fokussierung mit dem sogenannten Führungsauge des Benutzers vorgenommen wird. Das Führungsauge ist allerdings nicht bei allen Benutzern identisch. So ist bei einem ersten Benutzer das Führungsauge das linke Auge. Bei einem zweiten Benutzer ist das Führungsauge das rechte Auge. Somit können sowohl die Qualität der Fokussierung als auch die Qualität der Korrektur der Fehlsichtigkeit durchaus schwanken.

Aus der US 6,266,185 B1 ist ein optisches System in Form eines binokularen Fernglases bekannt, bei dem ein erster Tubus und ein zweiter Tubus mittels einer ersten Knickbrücke und mittels einer zweiten Knickbrücke verbunden sind, die beabstandet entlang einer Knickachse angeordnet sind. Zwischen der ersten Knickbrücke und der zweiten Knickbrücke entsteht hierdurch ein freier Bereich, in dem ein Benutzer mit Fingern eingreifen kann. Ein erstes Drehrad zur Fokussierung ist bei diesem Stand der Technik an einer äußeren Seite der ersten Knickbrücke angebracht. Die erste Knickbrücke ist hohl ausgebildet und weist mechanische Einheiten in ihrem Inneren auf, um die mechanischen Drehbewegungen des ersten Drehrads auf eine zur Fokussierung verwendete optische Einheit zu übertragen. Bei dem bekannten Fernglas ist der freie Bereich allerdings recht klein ausgestaltet (beispielsweise 60 mm). Da die Hand eines Benutzers aber im Durchschnitt über 60 mm breit ist, können nur wenige Finger einer Hand den freien Bereich tatsächlich durchgreifen. Die erste Knickbrücke trennt aber einen Bereich zwischen dem freien Bereich und dem ersten Drehrad, so dass der freie Bereich und das erste Drehrad recht weit auseinander liegen (in der Regel 15 mm). Aufgrund der geringen Breite ist ein Benutzer dann meist gehalten, mit wenigen Fingern in den freien Bereich einzugreifen. Hierzu werden in der Regel der Mittelfinger, der Ringfinger und der kleine Finger verwendet. Um nun mit dem Zeigefinger das erste Drehrad zu bedienen, muss man den Zeigefinger mindestens 15 mm (Breite der ersten Knickbrücke) abspreizen, um das erste Drehrad zu erreichen. Dies ist oft schwer machbar.

Ferner wird auf die DE 42 44 161 A1, die AT 506 437 A1, die US 2006/0056019 A1, die US 5,610,761 A sowie die US 5,103,248 A als Stand der Technik hingewiesen.

Der Erfindung liegt die Aufgabe zugrunde, ein optisches System anzugeben, bei dem die Einstellung der Fokussierung und die Korrektur einer Fehlsichtigkeit eines Benutzers derart erfolgen kann, dass eine gute Qualität der Fokussierung und der Korrektur der Fehlsichtigkeit eines Benutzers erfolgen kann, wobei das optische System ergonomisch leicht bedienbar ist.

Diese Aufgabe wird mit einem Fernglas mit den Merkmalen des Anspruchs 1 gelöst. Ein erfindungsgemäßes Verfahren zum Betrieb des Fernglases ist durch die Merkmale des Anspruchs 10 gegeben. Weitere Merkmale der Erfindung ergeben sich aus den weiteren Ansprüchen, aus den nachfolgenden Beschreibungen und/oder aus den beigefügten Figuren.

Das erfindungsgemäße Fernglas weist mindestens ein erstes optisches Teilsystem auf, welches in einem ersten Gehäuseteil angeordnet ist. Ferner weist das erfindungsgemäße Fernglas ein zweites optisches Teilsystem auf, welches in einem zweiten Gehäuseteil angeordnet ist. Darüber hinaus ist bei dem erfindungsgemäßen Fernglas mindestens eine erste Knickbrücke vorgesehen, welche das erste Gehäuseteil mit dem zweiten Gehäuseteil verbindet. Die erste Knickbrücke weist mindestens ein an dem ersten Gehäuseteil angeordnetes erstes Scharnierteil auf. Ferner weist die erste Knickbrücke ein an dem zweiten Gehäuseteil angeordnetes zweites Scharnierteil auf, wobei das erste Scharnierteil an dem zweiten Scharnierteil derart angeordnet ist, dass das erste Scharnierteil und das zweite Scharnierteil um eine erste Rotationsachse drehbar angeordnet sind. Das erste optische Teilsystem weist mindestens eine erste Fokussiereinheit auf. Ferner weist das zweite optische Teilsystem mindestens eine zweite Fokussiereinheit auf. Darüber hinaus weist das erste optische Teilsystem mindestens eine erste Antriebseinheit zur Bewegung der ersten Fokussiereinheit auf. Ferner weist das zweite optische Teilsystem mindestens eine zweite Antriebseinheit zur Bewegung der zweiten Fokussiereinheit auf. Zusätzlich weist das erfindungsgemäße Fernglas mindestens eine erste Steuereinheit zur Ansteuerung der ersten Antriebseinheit und/oder der zweiten Antriebseinheit auf. Bei dem erfindungsgemäßen Fernglas ist es nun vorgesehen, dass die erste Steuereinheit elektromechanisch ausgebildet ist.

Die Erfindung geht von der überraschenden Erkenntnis aus, dass durch Umwandlung einer mechanischen Bewegung (beispielsweise durch Rotation eines ersten Drehrads zur Einstellung einer Fokussierung auf ein abzubildendes Objekt) in ein elektronisches Steuersignal und die Verwendung des elektronischen Steuersignals zur Ansteuerung der Fokussiereinheit die oben genannten Nachteile überwunden werden. Bei dem erfindungsgemäßen Fernglas ist es vorgesehen, dass die erste Steuereinheit eine mechanische Bewegung in ein erstes elektronisches Steuersignal umwandelt. Das erste elektronische Steuersignal wird der ersten Antriebseinheit zum Bewegen der ersten Fokussiereinheit und/oder der zweiten Antriebseinheit zum Bewegen der zweiten Fokussiereinheit zugeführt, so dass ein Fokussieren auf das Objekt erfolgt. Ferner ist es auch möglich, ein zweites elektronisches Steuersignal zu erzeugen, welches der ersten Antriebseinheit und/oder der zweiten Antriebseinheit zugeführt wird, so dass der relative Abstand der ersten Fokussiereinheit zur zweiten Fokussiereinheit entlang der ersten Rotationsachse eingestellt wird, um eine Fehlsichtigkeit eines Benutzers zu korrigieren.

Bei dem erfindungsgemäßen Fernglas ist es vorgesehen, dass das erste optische Teilsystem mindestens ein erstes Okular und insbesondere mindestens ein erstes Objektiv aufweist. Die erste Fokussiereinheit ist als separate optische Einheit zum ersten Okular und insbesondere zu dem ersten Objektiv ausgebildet. Es bewegt sich daher zur Fokussierung die erste Fokussiereinheit, nicht jedoch das erste Okular und insbesondere nicht das erste Objektiv.

Bei einer weiteren Ausführungsform des erfindungsgemäßen Fernglases ist es zusätzlich oder alternativ vorgesehen, dass das zweite optische Teilsystem mindestens ein zweites Okular und insbesondere mindestens ein zweites Objektiv aufweist. Die zweite Fokussiereinheit ist als separate optische Einheit zum zweiten Okular und insbesondere zum zweiten Objektiv ausgebildet. Es bewegt sich daher zur Fokussierung die zweite Fokussiereinheit, nicht jedoch das zweite Okular und insbesondere nicht das zweite Objektiv.

Bei dem erfindungsgemäßen Fernglas ist es vorgesehen, dass das Fernglas mindestens eine zweite Knickbrücke aufweist, welche das erste Gehäuseteil mit dem zweiten Gehäuseteil verbindet, wobei die zweite Knickbrücke mindestens ein an dem ersten Gehäuseteil angeordnetes drittes Scharnierteil aufweist, wobei die zweite Knickbrücke mindestens ein an dem zweiten Gehäuseteil angeordnetes viertes Scharnierteil aufweist und wobei das dritte Scharnierteil an dem vierten Scharnierteil derart angeordnet ist, dass das dritte Scharnierteil und das vierte Scharnierteil um die erste Rotationsachse drehbar angeordnet sind.

Das Vorgenannte weist zahlreiche Vorteile auf. Zum einen kann die erste Steuereinheit entlang der gemeinsamen ersten Rotationsachse der ersten Knickbrücke und der zweiten Knickbrücke angeordnet werden. Dies ermöglicht eine recht gute ergonomische Anordnung der ersten Steuereinheit, so dass eine einfache Bedienung der ersten Steuereinheit möglich ist. Zum anderen können die erste Knickbrücke und/oder die zweite Knickbrücke recht schmal ausgebildet werden, da lediglich elektrische Kabel durch die erste Knickbrücke und/oder die zweite Knickbrücke geführt werden müssen und da die erste Knickbrücke und die zweite Knickbrücke ferner nur die mechanische Stabilität des optischen Systems gewährleisten.

Bei einer weiteren Ausführungsform des erfindungsgemäßen Fernglases ist es zusätzlich oder alternativ vorgesehen, dass die erste Knickbrücke auf der Seite des Okulars und die zweite Knickbrücke auf der Seite des Objektivs derart angeordnet sind, dass die erste Knickbrücke und die zweite Knickbrücke einen Abstand von ca. 20 mm bis 30 mm zueinander aufweisen. Sie bilden somit einen Zwischenraum, in dem die erste Steuereinheit angeordnet ist und weitere Einheiten der optischen Einheiten angeordnet werden können.

Bei einem wiederum weiteren Ausführungsbeispiel des erfindungsgemäßen Fernglases ist es zusätzlich oder alternativ vorgesehen, dass die erste Steuereinheit am oder im Wesentlichen im Bereich des mechanischen Schwerpunkts des Fernglases angeordnet ist. Hierdurch ist es möglich, dass der Benutzer während der Benutzung des Fernglases das Fernglas so mit seinen Händen fassen kann, dass seine unterstützenden Daumen unter dem Schwerpunkt liegen. Auf diese Weise werden insbesondere Zitterbewegungen minimiert, welche ansonsten die Qualität der Abbildung verringern.

Ferner hat sich gezeigt, dass aufgrund des vorgenannten Zwischenraums es möglich ist, die erste Steuereinheit mit dem Zeigefinger derart zu bedienen, dass dieser nicht gespreizt werden muss.

Bei einer wiederum weiteren Ausführungsform des erfindungsgemäßen Fernglases ist zusätzlich zu der ersten Knickbrücke und zu der zweiten Knickbrücke mindestens eine dritte Knickbrücke vorgesehen, wobei die dritte Knickbrücke mindestens ein an dem ersten Gehäuseteil angeordnetes fünftes Scharnierteil aufweist, wobei die dritte Knickbrücke mindestens ein an dem zweiten Gehäuseteil angeordnetes sechstes Scharnierteil aufweist und wobei das fünfte Scharnierteil an dem sechsten Scharnierteil derart angeordnet ist, dass das fünfte Scharnierteil und das sechste Scharnierteil um die erste Rotationsachse drehbar angeordnet sind. Die dritte Knickbrücke ist insbesondere auf der Seite des Objektivs angeordnet und dient der mechanischen Verstärkung des optischen Systems.

Bei einem weiteren Ausführungsbeispiel des erfindungsgemäßen Fernglases ist es zusätzlich oder alternativ vorgesehen, dass die erste Knickbrücke und die zweite Knickbrücke entlang der ersten Rotationsachse beabstandet zueinander angeordnet sind. Beispielsweise ist es vorgesehen, dass die ersten Knickbrücke und die zweite Knickbrücke einen Abstand im Bereich von 10 mm bis 40 mm zueinander aufweisen. Bei einem weiteren Ausführungsbeispiel ist es vorgesehen, dass die erste Knickbrücke und die zweite Knickbrücke einen Abstand im Bereich von 15 mm bis 35 mm zueinander aufweisen. Bei einem wiederum weiteren Ausführungsbeispiel des erfindungsgemäßen Fernglases ist es vorgesehen, dass die erste Knickbrücke und die zweite Knickbrücke einen Abstand im Bereich von 20 mm bis 30 mm zueinander aufweisen. Sämtliche vorgenannten Bereichsgrenzen sind von den beanspruchten Bereichen mit umfasst. Es wird darauf hingewiesen, dass die Erfindung auf die vorgenannten Bereiche nicht eingeschränkt ist. Vielmehr ist jeder geeignete Bereich des Abstands zwischen der ersten Knickbrücke und der zweiten Knickbrücke verwendbar.

Bei einem weiteren Ausführungsbeispiel des erfindungsgemäßen Fernglases ist es zusätzlich oder alternativ vorgesehen, dass die erste Steuereinheit mindestens einen ersten Hall-Sensor umfasst. Die Erfindung ist aber nicht auf einen Hall-Sensor eingeschränkt, vielmehr können jegliche Art von Steuereinheiten verwendet werden, die eine mechanische Bewegung in ein elektronisches Steuersignal umsetzen können, beispielsweise auch optische Drehgeber, Taster, Schalter und/oder Regler.

Bei einem wiederum weiteren Ausführungsbeispiel des erfindungsgemäßen Fernglases ist es zusätzlich oder alternativ vorgesehen, dass das erfindungsgemäße Fernglas mindestens eine zweite Steuereinheit zur Ansteuerung der ersten Antriebseinheit und/oder der zweiten Antriebseinheit zur Einstellung eines relativen Abstands der ersten Fokussiereinheit zur zweiten Fokussiereinheit entlang der ersten Rotationsachse aufweist. Die zweite Steuereinheit wird bei dieser Ausführungsform des erfindungsgemäßen Fernglases zur Korrektur einer Fehlsichtigkeit eines Benutzers verwendet.

Bei einer Ausführungsform des erfindungsgemäßen Fernglases ist es zusätzlich oder alternativ vorgesehen, dass die zweite Steuereinheit als Schaltelement zur Schaltung der ersten Steuereinheit von einem ersten Steuerzustand in einen zweiten Steuerzustand ausgebildet ist. Bei dieser Ausführungsform des erfindungsgemäßen Fernglases ist es vorgesehen, dass ein erstes elektronisches Steuersignal der ersten Steuereinheit im ersten Steuerzustand zur Fokussierung des Fernglases auf ein abzubildendes Objekt verwendet wird. In dem zweiten Steuerzustand wird das erste elektronische Steuersignal der ersten Steuereinheit dazu verwendet, um den relativen Abstand der ersten Fokussiereinheit zur zweiten Fokussiereinheit entlang der ersten Rotationsachse einzustellen, um eine Fehlsichtigkeit eines Benutzers des Fernglases auszugleichen.

Bei einem wiederum weiteren Ausführungsbeispiel des erfindungsgemäßen Fernglases ist es zusätzlich oder alternativ vorgesehen, dass die zweite Steuereinheit mindestens einen zweiten Hall-Sensor umfasst. Die Erfindung ist aber nicht auf einen Hall-Sensor eingeschränkt. Vielmehr kann jegliche Art von Steuereinheiten verwendet werden, die eine mechanische Bewegung in ein elektronisches Steuersignal umsetzen können, beispielsweise auch optische Drehgeber, Taster, Schalter und/oder Regler.

Die Erfindung betrifft auch ein Verfahren zum Betrieb eines Fernglases, das mindestens eines der oben oder weiter unten genannten Merkmale oder eine Kombination von mindestens zwei der bereits oben oder weiter unten genannten Merkmale aufweist. Bei dem erfindungsgemäßen Verfahren ist es nun vorgesehen, dass die erste Steuereinheit eine mechanische Bewegung in ein erstes elektronisches Steuersignal umwandelt. Das erste elektronische Steuersignal wird der ersten Antriebseinheit zum Bewegen der ersten Fokussiereinheit zugeführt. Zusätzlich oder alternativ ist es vorgesehen, dass das erste elektronische Steuersignal der zweiten Antriebseinheit zum Bewegen der zweiten Fokussiereinheit zugeführt wird. Die Bewegung der ersten Fokussiereinheit und/oder der zweiten Fokussiereinheit erfolgt zur Fokussierung des Fernglases auf ein abzubildendes Objekt. Hierbei ist es bei einem Ausführungsbeispiel des erfindungsgemäßen Verfahrens vorgesehen, dass die erste Fokussiereinheit und die zweite Fokussiereinheit gleichzeitig in eine vorgegebene Richtung bewegt werden, um die Fokussierung zu ermöglichen.

Bei einem weiteren Ausführungsbeispiel des erfindungsgemäßen Verfahrens ist es vorgesehen, dass die zweite Steuereinheit eine mechanische Bewegung in ein zweites elektronisches Steuersignal umwandelt. Das zweite elektronische Steuersignal wird der ersten Antriebseinheit zugeführt. Alternativ oder zusätzlich ist es vorgesehen, dass das zweite elektronische Steuersignal der zweiten Antriebseinheit zugeführt wird. Auf diese Weise wird der Abstand der ersten Fokussiereinheit zur zweiten Fokussiereinheit entlang der ersten Rotationsachse eingestellt. Wie oben bereits geschildert, dient dies der Korrektur einer Fehlsichtigkeit des Benutzers des Fernglases.

Bei einem wiederum weiteren Ausführungsbeispiel des erfindungsgemäßen Verfahrens ist es vorgesehen, dass mittels der zweiten Steuereinheit die erste Steuereinheit von einem ersten Steuerzustand in einen zweiten Steuerzustand geschaltet wird. Im ersten Steuerzustand steuert die erste Steuereinheit die Fokussierung des Fernglases auf ein abzubildendes Objekt. Im zweiten Steuerzustand steuert die erste Steuereinheit die Korrektur der Fehlsichtigkeit eines Benutzers des Fernglases. Im ersten Steuerzustand wird das erste elektronische Steuersignal der ersten Antriebseinheit zum Bewegen der ersten Fokussiereinheit und/oder der zweiten Antriebseinheit zum Bewegen der zweiten Fokussiereinheit zugeführt. Im zweiten Steuerzustand wandelt die erste Steuereinheit eine mechanische Bewegung in das zweite elektronische Steuersignal um. Das zweite elektronische Steuersignal wird nun der ersten Antriebseinheit zur Bewegung der ersten Fokussiereinheit oder der zweiten Antriebseinheit zur Bewegung der zweiten Fokussiereinheit zugeführt, so dass der relative Abstand der ersten Fokussiereinheit zur zweiten Fokussiereinheit entlang der ersten Rotationsachse eingestellt wird.

Die Erfindung wird nachfolgend anhand von Ausführungsbeispielen mittels Figuren näher erläutert. Dabei zeigen
- Fig. 1: eine schematische Darstellung eines ersten optischen Systems in Form eines Fernglases mit einer einzelnen Knickbrücke (nicht zur Erfindung gehörig; Figur 1 dient aber dem Verständnis der Erfindung);
- Fig. 2: eine schematische Darstellung eines zweiten optischen Systems in Form eines Fernglases mit drei Knickbrücken;
- Fig. 3: eine schematische Darstellung eines dritten optischen Systems in Form eines Fernglases mit zwei Knickbrücken;
- Fig. 4: eine schematische Darstellung einer ersten Steuereinheit;
- Fig. 5: eine schematische Darstellung einer Bewegungseinheit für eine Fokussiereinheit;
- Fig. 6: eine schematische Darstellung eines Blockschaltbildes von Kontrolleinheiten des Fernglases nach den Figuren 1 bis 3;
- Fig. 7: eine schematische Darstellung einer ersten Übertragungsfunktion für eine Bewegung einer Fokussiereinheit;
- Fig. 8: eine schematische Darstellung einer zweiten Übertragungsfunktion und einer dritten Übertragungsfunktion für eine Bewegung einer Fokussiereinheit; und
- Fig. 9: eine schematische Darstellung einer vierten Übertragungsfunktion für eine Bewegung einer Fokussiereinheit.

Die Erfindung wird nachfolgend anhand eines optischen Systems in Form eines binokularen Fernglases besprochen (nachfolgend nur Fernglas genannt).

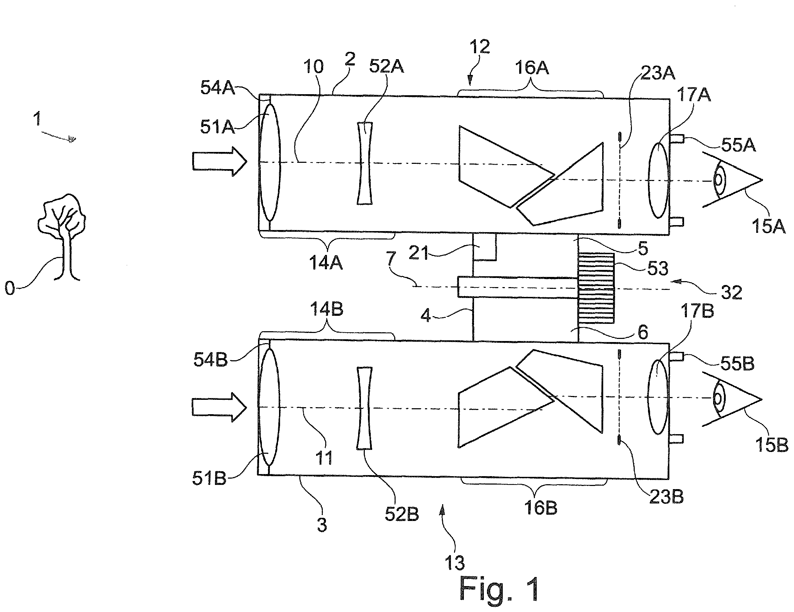

**Figur** 1 zeigt eine erste schematische Darstellung eines Fernglases 1, welches ein tubusförmiges erstes Gehäuseteil 2 und ein tubusförmiges zweites Gehäuseteil 3 aufweist. Durch das erste Gehäuseteil 2 verläuft eine erste optische Achse 10. Hingegen verläuft durch das zweite Gehäuseteil 3 eine zweite optische Achse 11. Das erste Gehäuseteil 2 ist mit dem zweiten Gehäuseteil 3 über eine erste Knickbrücke 4 verbunden. Die erste Knickbrücke 4 weist ein erstes Scharnierteil 5 auf, welches an dem ersten Gehäuseteil 2 angeordnet ist. Ferner weist die erste Knickbrücke 4 ein zweites Scharnierteil 6 auf, welches an dem zweiten Gehäuseteil 3 angeordnet ist. Das erste Scharnierteil 5 und das zweite Scharnierteil 6 sind derart zueinander angeordnet, dass sie um eine gemeinsame erste Rotationsachse 7 gedreht werden können. Es ist dann möglich, die relative Position des ersten Gehäuseteils 2 und des zweiten Gehäuseteils 3 durch Rotation um die erste Rotationsachse 7 einzustellen. Auf diese Weise ist es möglich, das erste Gehäuseteil 2 und das zweite Gehäuseteil 3 auf die Pupillendistanz eines Benutzers einzustellen, so dass zum einen das erste Gehäuseteil 2 an dem einen der beiden Augen des Benutzers angeordnet ist und so dass zum anderen das zweite Gehäuseteil 3 an dem anderen der beiden Augen des Benutzers angeordnet ist.

Das erste Gehäuseteil 2 weist ein erstes optisches Teilsystem 12 auf. Das erste optische Teilsystem 12 ist mit einem ersten Objektiv 14A, mit einem als erstes Prismensystem ausgebildeten ersten Umkehrsystem 16A und einem ersten Okular 17A versehen. An dem ersten Okular 17A kann ein erstes Auge 15A eines Benutzers zur Beobachtung eines Objekts O angeordnet werden. Die erste optische Achse 10 des ersten optischen Teilsystem 12 wird aufgrund des ersten Prismensystems 16A (erstes Umkehrsystem 16A) lateral etwas versetzt, so dass es zu einer stufigen Ausbildung der ersten optischen Achse 10 kommt. Das erste Objektiv 14A besteht bei diesem Ausführungsbeispiel aus einer ersten Fronteinheit 51A und einer ersten Fokussiereinheit 52A. Weitere Ausführungsformen des ersten Objektivs 14A sehen eine unterschiedliche Anzahl an einzelnen Linsen oder aus Linsen bestehenden Kittgliedern vor.

Zum Zwecke einer Fokussierung des durch das Fernglas 1 betrachteten Objekts O kann entweder das erste Okular 17A oder die erste Fokussiereinheit 52A axial entlang der ersten optischen Achse 10 verschoben werden. Bei weiteren Ausführungsformen ist es vorgesehen, dass die erste Fronteinheit 51A oder sogar das vollständige erste Objektiv 14A entlang der ersten optischen Achse 10 verschoben wird. Bei weiteren Ausführungsformen werden die erste Fronteinheit 51A und die erste Fokussiereinheit 52A relativ zueinander zur Fokussierung verschoben.

Das zweite Gehäuseteil 3 weist ein zweites optisches Teilsystem 13 auf. Das zweite optische Teilsystem 13 ist mit einem zweiten Objektiv 14B, mit einem als Prismensystem ausgebildeten zweiten Umkehrsystem16B und mit einem zweiten Okular 17B versehen. An dem zweiten Okular 17B kann ein zweites Auge 15B des Benutzers zur Beobachtung des Objekts O angeordnet werden. Die zweite optische Achse 11 des zweiten optischen Teilsystems 13 wird aufgrund des zweiten Umkehrsystems 16B (zweites Prismensystem) lateral etwas versetzt, so dass es zu einer stufigen Ausbildung der zweiten optischen Achse 11 kommt.

Das zweite Objektiv 14B besteht bei diesem Ausführungsbeispiel aus einer zweiten Fronteinheit 51B und einer zweiten Fokussiereinheit 52B. Weitere Ausführungsformen des zweiten Objektivs 14B sehen eine unterschiedliche Anzahl an einzelnen Linsen oder aus Linsen bestehenden Kittgliedern vor. Zum Zwecke einer Fokussierung des durch das Fernglas 1 betrachteten Objekts O kann entweder das zweite Okular 17B oder die zweite Fokussiereinheit 52B axial entlang der zweiten optischen Achse 11 verschoben werden. Bei einer weiteren Ausführungsform wird die zweite Fronteinheit 51B oder sogar das vollständige zweite Objektiv 14B entlang der zweiten optischen Achse 11 verschoben. Bei einer weiteren Ausführungsform werden die zweite Fronteinheit 51B und die zweite Fokussiereinheit 52B zur Fokussierung relativ zueinander verschoben.

Bei beiden oben dargestellten optischen Teilsystemen 12, 13 ist die Strahlrichtung der in die beiden optischen Teilsysteme 12, 13 einfallenden Lichtstrahlen wie folgt: Objekt O - Objektiv 14A, 14B - Umkehrsystem (Prismensystem) 16A, 16A - Okular 17A, 17B - Auge 15A, 15B.

Zum Fokussieren des Fernglases 1 auf das Objekt O und zur Korrektur einer Fehlsichtigkeit des Benutzers ist bei dem hier dargestellten Ausführungsbeispiel an der Knickbrücke 4 eine erste Steuereinheit 32 angeordnet, die ein Drehrad 53 aufweist. Wie weiter unten näher erläutert wird, können mit diesem Drehrad 53 die erste Fokussiereinheit 52A und die zweite Fokussiereinheit 52B zum einen gemeinsam und parallel zueinander entlang der beiden optischen Achsen 10 und 11 zur Fokussierung verschoben werden. Zum anderen ist das Drehrad 53 bei diesem Ausführungsbeispiel derart ausgebildet, dass auch nur eine Einzelne der beiden vorgenannten Fokussiereinheiten 52A und 52B derart verschoben werden kann, dass der relative Abstand der ersten Fokussiereinheit 52A zur zweiten Fokussiereinheit 52B entlang der ersten optischen Achse 10 und der zweiten optischen Achse 11 zueinander verstellt werden kann. Der relative Abstand der ersten Fokussiereinheit 52A zur zweiten Fokussiereinheit 52B ist der Abstand zwischen einer ersten Geraden und einer zweiten Geraden entlang der ersten Rotationsachse 7. Die erste Gerade ist senkrecht zur ersten optischen Achse 10 ausgerichtet und verläuft durch eine erste Position, welche die erste Fokussiereinheit 52A auf der ersten optischen Achse 10 einnimmt. Die zweite Gerade ist senkrecht zur zweiten optischen Achse 11 ausgerichtet und verläuft durch eine zweite Position, welche die zweite Fokussiereinheit 52B auf der zweiten optischen Achse 11 einnimmt.

Sowohl das erste Objektiv 14A als auch das zweite Objektiv 14B erzeugen bei dem in **Figur 1** dargestellten Ausführungsbeispiel ein reales, relativ zum betrachteten Objekt O auf dem Kopf stehendes Bild in einer dem jeweiligen Objektiv 14A, 14B zugeordneten Bildebene. Das dem ersten Objektiv 14A zugeordnete Prismensystem 16A (erstes Umkehrsystem) sowie das dem zweiten Objektiv 14B zugeordnete zweite Prismensystem 16B (zweites Umkehrsystem) werden zur Bildaufrichtung verwendet. Somit wird das auf dem Kopf stehende Bild wieder aufgerichtet und in einer neuen Bildebene, der linken Zwischenbildebene 23A oder der rechten Zwischenbildebene 23B, abgebildet. Das erste Prismensystem 16A (erstes Umkehrsystem) und das zweite Prismensystem 16B (zweites Umkehrsystem) können als Abbe-König-Prismensystem, Schmidt-Pechan-Prismensystem, Uppendahl-Prismensystem, Porro-Prismensystem oder einer anderen Prismensystem-Variante aufgebaut sein. In der linken Zwischenbildebene 23A ist beispielsweise eine das Sehfeld scharf begrenzende erste Feldblende angeordnet. Ferner kann beispielsweise in der rechten Zwischenbildebene 23B eine das Sehfeld scharf begrenzende zweite Feldblende angeordnet sein.

Das erste Okular 17A wird verwendet, um das Bild der linken Zwischenbildebene 23A in eine beliebige Entfernung, z.B. ins Unendliche oder in eine andere Entfernung abzubilden. Ferner wird das zweite Okular 17B dazu verwendet, um das Bild der rechten Zwischenbildebene 23B in eine beliebige Entfernung, z.B. ins Unendliche oder in eine andere Entfernung abzubilden.

Sämtliche vorstehend und auch nachstehend dargestellten optischen Einheiten sind mit Fassungen und Befestigungseinheiten (nicht dargestellt) an dem Gehäuseteil, in dem sie angeordnet sind (also das erste Gehäuseteil 2 oder das zweite Gehäuseteil 3), befestigt.

Eine erste Aperturblende 54A des ersten optischen Teilsystems 12 und eine zweite Aperturblende 54B des zweiten optischen Teilsystems 13 können entweder durch eine Fassung eines optischen Elements des entsprechenden optischen Teilsystems 12, 13 (in der Regel durch die Fassung der Linsen der ersten Fronteinheit 51A oder der zweiten Fronteinheit 51B) oder durch eine separate Blende gebildet sein. Jede der vorgenannten Aperturblenden 54A und 54B kann in Strahlrichtung durch das entsprechende optische Teilsystem 12 oder 13 in einer Ebene abgebildet werden, die in Strahlrichtung hinter dem entsprechenden Okular 17A oder 17B liegt und typischerweise bis 25 mm Abstand zu diesem hat. Diese Ebene wird Ebene der Austrittspupille genannt.

Zum Schutz des Benutzers vor seitlich einfallendem Licht können an dem ersten Okular 17A eine ausziehbare, ausdrehbare oder umklappbare erste Augenmuschel 55A und an dem zweiten Okular 17B eine ausziehbare, ausdrehbare oder umklappbare zweite Augenmuschel 55B vorgesehen sein.

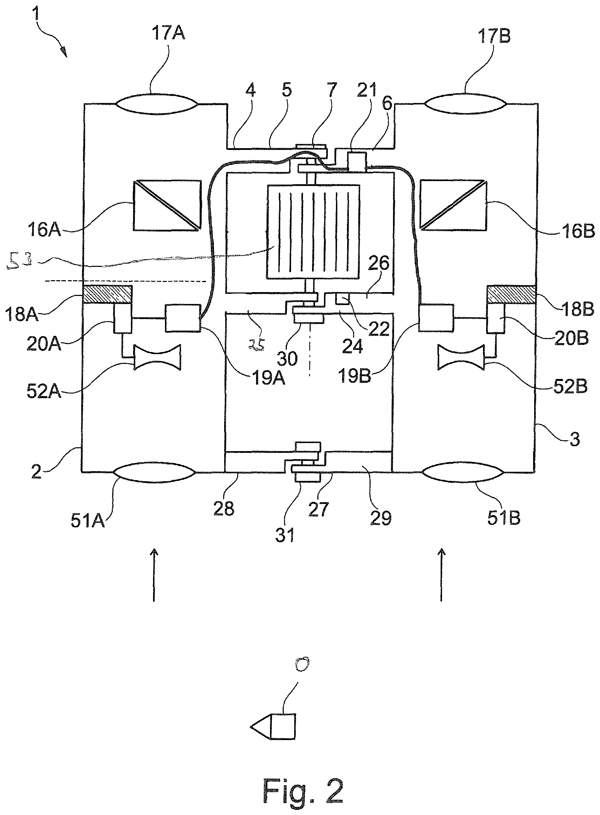

**Figur 2** zeigt eine schematische Darstellung eines weiteren optischen Systems in Form eines Fernglases 1. **Figur 2** beruht auf der **Figur 1**. Gleiche Bauteile sind daher mit gleichen Bezugszeichen versehen. Im Unterschied zum Ausführungsbeispiel der **Figur 1** weist das Ausführungsbeispiel der **Figur 2** insgesamt drei Knickbrücken auf. Zusätzlich zu der ersten Knickbrücke 4 weist das Fernglas 1 gemäß der **Figur 2** eine zweite Knickbrücke 24 und eine dritte Knickbrücke 27 auf.

Die zweite Knickbrücke 24 weist ein drittes Scharnierteil 25 auf, welches an dem ersten Gehäuseteil 2 angeordnet ist. Ferner weist die zweite Knickbrücke 24 ein viertes Scharnierteil 26 auf, welches an dem zweiten Gehäuseteil 3 angeordnet ist. Das dritte Scharnierteil 25 und das vierte Scharnierteil 26 sind an einem ersten Achsbolzen 30 angeordnet, an dem ebenfalls das erste Scharnierteil 5 und das zweite Scharnierteil 6 der ersten Knickbrücke 4 angeordnet sind. Durch den ersten Achsbolzen 30 verläuft die erste Rotationsachse 7.

Ein fünftes Scharnierteil 28 der dritten Knickbrücke 27 ist an dem ersten Gehäuseteil 2 angeordnet. Ein sechstes Scharnierteil 29 der dritten Knickbrücke 27 ist an dem zweiten Gehäuseteil 3 angeordnet. Das fünfte Scharnierteil 28 und das sechste Scharnierteil 29 sind drehbar an einem zweiten Achsbolzen 31 angeordnet, so dass die Einstellung der relativen Position des ersten Gehäuseteils 2 und des zweiten Gehäuseteils 3 zueinander auch durch eine Drehung des fünften Scharnierteils 28 und des sechsten Scharnierteils 29 zueinander erzielt werden kann.

Bei dem in **Figur 2** dargestellten Ausführungsbeispiel ist das Drehrad 53 der ersten Steuereinheit in einem Zwischenbereich zwischen der ersten Knickbrücke 4 und der zweiten Knickbrücke 24 an dem ersten Achsbolzen 30 angeordnet.

Die **Figur 2** zeigt auch eine erste Bewegungseinrichtung für die erste Fokussiereinheit 52A und eine zweite Bewegungseinrichtung für die zweite Fokussiereinheit 52B.

Nachfolgend wird auf die erste Bewegungseinrichtung für die erste Fokussiereinheit 52A eingegangen, die beispielsweise wie folgt aufgebaut ist. So ist an dem ersten Gehäuseteil 2 eine erste Befestigungseinheit 18A angeordnet, an der wiederum eine erste Antriebseinheit 20A angeordnet ist. Die erste Antriebseinheit 20A ist mit der ersten Fokussiereinheit 52A verbunden. Ferner ist eine erste Kontrolleinheit 19A mit der ersten Antriebseinheit 20A verbunden. Die erste Kontrolleinheit 19A ist wiederum mit einem ersten Hall-Sensor 21 verbunden, der an dem zweiten Scharnierteil 6 der ersten Knickbrücke 4 angeordnet ist.

Nachfolgend wird nun auf die zweite Bewegungseinrichtung für die zweite Fokussiereinheit 52B eingegangen, die im Grunde einen identischen Aufbau wie die erste Bewegungseinrichtung aufweist. So ist an dem zweiten Gehäuseteil 3 eine zweite Befestigungseinheit 18B angeordnet, an der wiederum eine zweite Antriebseinheit 20B angeordnet ist. Die zweite Antriebseinheit 20B ist mit der zweiten Fokussiereinheit 52B verbunden. Ferner ist eine zweite Kontrolleinheit 19B mit der zweiten Antriebseinheit 20B verbunden. Die zweite Kontrolleinheit 19B ist wiederum mit dem ersten Hall-Sensor 21 verbunden, der an dem zweiten Scharnierteil 6 der ersten Knickbrücke 4 angeordnet ist.

Die erste Antriebseinheit 20A und die zweite Antriebseinheit 20B sind beispielsweise als Piezo-Biege-Aktoren ausgebildet, wobei unter einem Aktor ein Stellelement verstanden wird, das eine Kraft oder eine Bewegung erzeugen kann. In der Literatur wird ein solches Stellelement oft auch als Aktuator bezeichnet. Es wird darauf hingewiesen, dass die Erfindungen nicht auf die Verwendung von Piezo-Biege-Aktoren eingeschränkt sind. Vielmehr können die erste Antriebseinheit 20A und die zweite Antriebseinheit 20B als jegliche Antriebseinheit ausgebildet sein, die für die Erfindung geeignet ist.

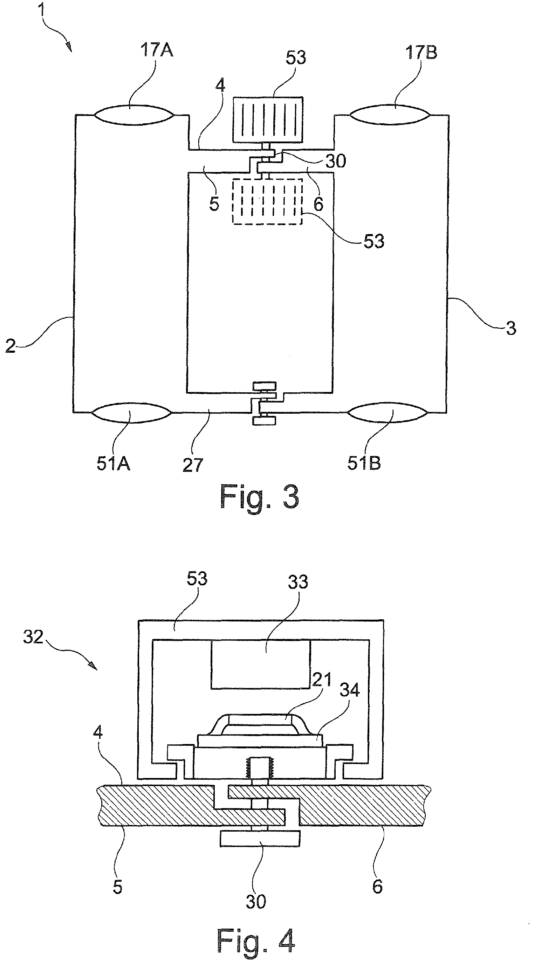

**Figur 3** zeigt eine schematische Darstellung eines weiteren optischen Systems in Form eines Fernglases 1. Die Ausführungsform der **Figur 3** beruht auf der Ausführungsform der **Figur 2**. Gleiche Bauteile sind daher mit gleichen Bezugszeichen versehen. Im Unterschied zum Ausführungsbeispiel der **Figur 2** ist bei dem Fernglas des Ausführungsbeispiels der **Figur 3** vorgesehen, dass nur zwei Knickbrücken verwendet werden, nämlich die erste Knickbrücke 4 und die dritte Knickbrücke 27. Die erste Knickbrücke 4 ist im Bereich des ersten Okulars 17A und des zweiten Okulars 17B (okularseitig) angeordnet. Die dritte Knickbrücke 27 ist im Bereich der ersten Fronteinheit 51A und der zweiten Fronteinheit 51B angeordnet (objektivseitig). Bei dem in **Figur 3** dargestellten Ausführungsbeispiel kann das Drehrad 53 der ersten Steuereinheit 32 an zwei unterschiedlichen Positionen angeordnet sein. Zum einen kann das Drehrad 53 der ersten Steuereinheit 32 beispielsweise an einer Außenseite der ersten Knickbrücke 4 angeordnet sein, die zum einen in Richtung des ersten Okulars 17A und des zweiten Okulars 17B und zum anderen nicht in Richtung des Zwischenbereichs zeigt, der zwischen der ersten Knickbrücke 4 und der dritten Knickbrücke 27 angeordnet ist. Zum anderen kann das Drehrad 53 der ersten Steuereinheit 32 an der Innenseite der Knickbrücke 4 angeordnet sein, die an den Zwischenbereich zwischen der ersten Knickbrücke 4 und der dritten Knickbrücke 27 angrenzt. Bei beiden Ausführungsformen ist das erste Drehrad 53 der ersten Steuereinheit 32 an dem ersten Achsbolzen 30 angeordnet, welcher das erste Scharnierteil 5 und das zweite Scharnierteil 6 der ersten Knickbrücke 4 scharnierend miteinander verbindet.

**Figur 4** zeigt eine Ausführungsform der ersten Steuereinheit 32, welche an der ersten Knickbrücke 4 angeordnet ist. Nachfolgend werden die einzelnen Bauteile der ersten Steuereinheit 32 näher erläutert.

Die erste Steuereinheit 32 weist zum einen das Drehrad 53 auf, das im Wesentlichen U-förmig ausgebildet ist. Im Basisteil der U-förmigen Ausbildung weist das Drehrad 53 einen Permanentmagneten 33 auf. Dieser ist beispielsweise an dem Basisteil der U-förmigen Ausbildung des Drehrads 53 angeklebt. Die erste Steuereinheit 32 weist ferner ein Halteelement 34 auf, welches an dem zweiten Scharnierteil 6 der Knickbrücke angeordnet ist. An dem Halteelement 34 ist der erste Hall-Sensor 21 angeordnet. Das Drehrad 53 bewegt sich relativ um den ersten Hall-Sensor 21 durch Rotation um die erste Rotationsachse 7. Durch Drehen des Drehrads 53 und durch eine Wechselwirkung des Permanentmagneten 33 mit dem ersten Hall-Sensor 21 wird das herrschende Magnetfeld geändert. Aufgrund dieser Änderung ist es möglich, den Rotationswinkel des Drehrads 53 zu bestimmen. Mittels des Rotationswinkels wird nun die Bewegung der ersten Fokussiereinheit 52A und/oder der zweiten Fokussiereinheit 52B bestimmt, die zur Fokussierung des Fernglases 1 auf das abzubildende Objekt O benötigt wird. Dies wird weiter unten noch näher erläutert.

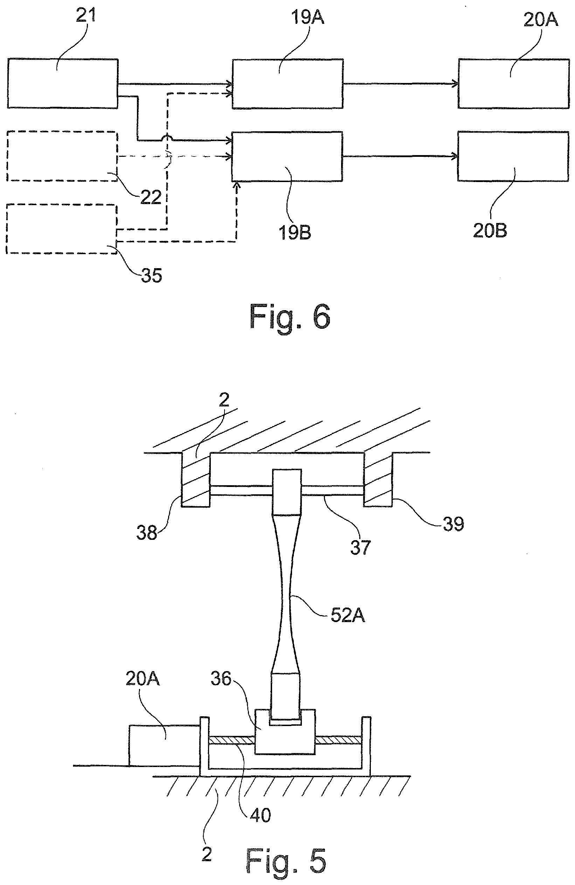

**Figur 5** zeigt eine schematische Darstellung der ersten Bewegungseinrichtung der ersten Fokussiereinheit 52A. Die erste Fokussiereinheit 52A weit ein erstes Ende und ein zweites Ende auf. Das erste Ende der ersten Fokussiereinheit 52A ist an einem Laufelement 36 angeordnet, welches wiederum an einer Gewindestange 40 angeordnet ist. Die Gewindestange 40 ist derart mit der ersten Antriebseinheit 20A verbunden, dass ein Bewegen des Laufelements 36 und somit eine Bewegung der ersten Fokussiereinheit 52A möglich ist. Mit dem zweiten Ende ist die erste Fokussiereinheit 52A an einem Führungselement 37 angeordnet, das sowohl an einem ersten Stutzen 38 als auch an einem zweiten Stutzen 39 angeordnet ist und das zwischen dem ersten Stutzen 38 und dem zweiten Stutzen 39 verläuft. Der erste Stutzen 38 und der zweite Stutzen 39 sind an dem ersten Gehäuseteil 2 angeordnet.

Die zweite Bewegungseinrichtung für die zweite Fokussiereinheit 52B kann identisch zu der ersten Bewegungseinrichtung aufgebaut sein.

**Figur 6** zeigt eine schematische Darstellung eines Blockschaltbildes von Einheiten, welche die erste Antriebseinheit 20A und die zweite Antriebseinheit 20B steuern, so dass die erste Fokussiereinheit 52A und/oder die zweite Fokussiereinheit 52B bewegt wird/werden. Bei dem in der **Figur 6** dargestellten Ausführungsbeispiel ist zur Ansteuerung der ersten Antriebseinheit 20A die erste Kontrolleinheit 19A in Form eines Microcontrollers vorgesehen. Ferner ist zur Ansteuerung der zweiten Antriebseinheit 20B die zweite Kontrolleinheit 19B in Form eines weiteren Microcontrollers vorgesehen. Wie oben bereits erwähnt, sind die erste Kontrolleinheit 19A, die zweite Kontrolleinheit 19B, die erste Antriebseinheit 20A und die zweite Antriebseinheit 20B Teil der ersten Steuereinheit 32. Sowohl die erste Kontrolleinheit 19A als auch die zweite Kontrolleinheit 19B sind mit dem ersten Hall-Sensor 21 verbunden. Bei dem in der **Figur 6** dargestellten Ausführungsbeispiel sind sowohl die erste Kontrolleinheit 19A als auch die zweite Kontrolleinheit 19B mit einer zweiten Steuereinheit 35 in Form eines Schalters verbunden. Der Schalter dient zur Schaltung sowohl der ersten Kontrolleinheit 19A als auch der zweiten Kontrolleinheit 19B in einen ersten Steuerzustand und in einen zweiten Steuerzustand.

Im ersten Steuerzustand wird mittels des Drehrads 53 die Fokussierung des Fernglases 1 auf das Objekt O eingestellt. Hierzu werden die erste Antriebseinheit 20A und die zweite Antriebseinheit 20B derart angesteuert, dass die erste Fokussiereinheit 52A entlang der ersten optischen Achse 10 und die zweite Fokussiereinheit 52B entlang der zweiten optischen Achse 11 parallel zueinander in dieselbe Richtung und mit derselben Wegstrecke bewegt werden. In dem zweiten Steuerzustand wird mittels des Drehrads 53 die Fehlsichtigkeit des Benutzers korrigiert. Hierzu wird im zweiten Steuerzustand ausschließlich die erste Fokussiereinheit 52A entlang der ersten optischen Achse 10 bewegt, so dass der relative Abstand der ersten Fokussiereinheit 52A zur zweiten Fokussiereinheit 52B eingestellt wird. Alternativ hierzu ist es vorgesehen, dass ausschließlich die zweite Fokussiereinheit 52B entlang der zweiten optischen Achse 11 bewegt wird, so dass der relative Abstand der ersten Fokussiereinheit 52A zur zweiten Fokussiereinheit 52B eingestellt wird.

Bei einer weiteren Ausführungsform (nicht dargestellt) ist nur eine einzelne Kontrolleinheit in Form eines Microcontrollers vorgesehen. Die einzelne Kontrolleinheit ist sowohl mit der ersten Antriebseinheit 20A als auch mit der zweiten Antriebseinheit 20B verbunden. Ferner ist die einzelne Kontrolleinheit mit der zweiten Steuereinheit 35 in Form eines Schalters verbunden. Der Schalter dient zur Schaltung der einzelnen Kontrolleinheit in einen ersten Steuerzustand und in einen zweiten Steuerzustand, deren Funktionen oben erläutert wurden.

Bei einer weiteren Ausführungsform ist anstatt der zweiten Steuereinheit 35 in Form eines Schalters eine zweite Steuereinheit, die einen zweiten Hall-Sensor 22 aufweist, mit der zweiten Kontrolleinheit 19B verbunden. Der zweite Hall-Sensor 22 wirkt mit einem weiteren, einen Permanentmagneten aufweisenden Drehrad (nicht dargestellt) zusammen, das an dem Fernglas 1 angeordnet ist. Durch Rotation des Drehrads 53 und Messung von Rotationswinkeln mit dem ersten Hall-Sensor 21 wird die Fokussierung eingestellt, wie oben geschildert. Hingegen wird durch Rotation des weiteren Drehrads und Messung von Rotationswinkeln mit dem zweiten Hall-Sensor 22 die zweite Kontrolleinheit 19B und die zweite Antriebseinheit 20B derart angesteuert, dass ausschließlich eine Bewegung der zweiten Fokussiereinheit 52B zur Korrektur der Fehlsichtigkeit des Benutzers bewirkt wird.

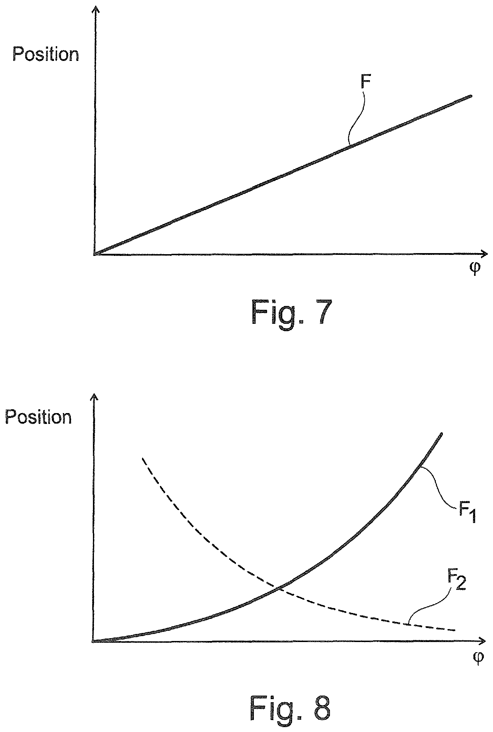

**Figur 7** zeigt ein erstes Ausführungsbeispiel, wie die Bewegung der ersten Fokussiereinheit 52A und/oder der zweiten Fokussiereinheit 52B von dem ermittelten Rotationswinkel ϕ des ersten Hall-Sensors 21 und/oder des zweiten Hall-Sensors 22 abhängt. In der **Figur 7** ist ein erster funktionaler Zusammenhang (erste Übertragungsfunktion F) dargestellt. Aufgetragen ist die Position der ersten Fokussiereinheit 52A auf der ersten optischen Achse 10 und/oder die Position der zweiten Fokussiereinheit 52B auf der zweiten optischen Achse 11 gegenüber dem Rotationswinkel ϕ des Drehrads 53. Bei diesem Ausführungsbeispiel besteht ein linearer Zusammenhang zwischen der Position und dem Rotationswinkel ϕ.

**Figur 8** zeigt ein zweites Ausführungsbeispiel, wie die Bewegung der ersten Fokussiereinheit 52A und/oder der zweiten Fokussiereinheit 52B von dem ermittelten Rotationswinkel ϕ des ersten Hall-Sensors 21 und/oder des zweiten Hall-Sensors 22 abhängt. Aufgetragen ist wiederum die Position der ersten Fokussiereinheit 52A auf der ersten optischen Achse 10 und/oder die Position der zweiten Fokussiereinheit 52B auf der zweiten optischen Achse 11 gegenüber dem Rotationswinkel ϕ des Drehrads 53. In der **Figur 8** ist ein zweiter funktionaler Zusammenhang (zweite Übertragungsfunktion F₁) dargestellt. Bei diesem Ausführungsbeispiel besteht ein nicht-linearer Zusammenhang zwischen der Position und dem Rotationswinkel ϕ, beispielsweise ein hyperbolischer Zusammenhang. Diese Ausführungsform wird beispielsweise verwendet, wenn die Genauigkeit der Fokussierung für einen Nahbereich und einen Fernbereich frei gewählt werden soll. Aufgrund des flachen Verlaufs der Übertragungsfunktion F₁ für kleine Rotationswinkel ϕ kann die Fokussierung im Nahbereich feinfühliger als im Fernbereich (große Rotationswinkel ϕ) ausgebildet werden. In der **Figur 8** ist ein dritter funktionaler Zusammenhang (dritte Übertragungsfunktion F₂) dargestellt. Bei diesem Ausführungsbeispiel besteht ein nicht-linearer Zusammenhang zwischen der Position und dem Rotationswinkel ϕ, beispielsweise ein hyperbolischer Zusammenhang. Diese Ausführungsform wird beispielsweise verwendet, wenn die Genauigkeit der Fokussierung für einen Nahbereich und einen Fernbereich frei gewählt werden soll. Aufgrund des flachen Verlaufs der Übertragungsfunktion F₂ für große Rotationswinkel ϕ kann die Fokussierung im Fernbereich feinfühliger als im Nahbereich (kleine Rotationswinkel ϕ) ausgebildet werden.

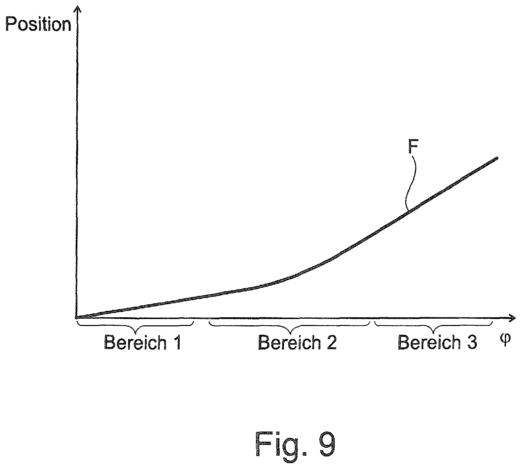

**Figur 9** zeigt ein viertes Ausführungsbeispiel, wie die Bewegung der ersten Fokussiereinheit 52A und/oder der zweiten Fokussiereinheit 52B von dem ermittelten Rotationswinkel ϕ des ersten Hall-Sensors 21 und/oder des zweiten Hall-Sensors 22 abhängt. Aufgetragen ist wiederum die Position der ersten Fokussiereinheit 52A auf der ersten optischen Achse 10 und/oder die Position der zweiten Fokussiereinheit 52B auf der zweiten optischen Achse 11 gegenüber dem Rotationswinkel ϕ des Drehrads 53. In der **Figur 9** ist ein vierter funktionaler Zusammenhang (vierte Übertragungsfunktion F) dargestellt. Bei diesem Ausführungsbeispiel besteht ein nicht-linearer Zusammenhang zwischen der Position und dem Rotationswinkel ϕ. Die dritte Übertragungsfunktion F ist derart gewählt, dass drei Bereiche entstehen. In einem ersten Bereich 1 ist die dritte Übertragungsfunktion F flach ausgebildet. Demnach kann durch eine Veränderung des Rotationswinkels ϕ des Drehrads 53 eine geringfügige Veränderung der Position der ersten Fokussiereinheit 52A an der ersten optischen Achse 10 oder der Position der zweiten Fokussiereinheit 52B an der zweiten optischen Achse 11 bewirkt werden. An den ersten Bereich 1 schließt sich ein zweiter Bereich 2 an, an den sich wiederum ein dritter Bereich 3 anschließt. Der zweite Bereich 2 ist ein Übergangsbereich. Der dritte Bereich 3 ist ein Bereich, in dem durch eine geringfügige Rotation des Drehrades 53 eine große Verstellung der Position der ersten Fokussiereinheit 52A an der ersten optischen Achse 10 oder der Position der zweiten Fokussiereinheit 52B an der zweiten optischen Achse 11 erzielt wird.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste

- 1: Fernglas
- 2: erstes Gehäuseteil
- 3: zweites Gehäuseteil
- 4: erste Knickbrücke
- 5: erstes Scharnierteil
- 6: zweites Scharnierteil
- 7: erste Rotationsachse
- 10: erste optische Achse
- 11: zweite optische Achse
- 12: erstes optisches Teilsystem
- 13: zweites optisches Teilsystem
- 14A: erstes Objektiv
- 14B: zweites Objektiv
- 15A: erstes Auge
- 15B: zweites Auge
- 16A: erstes Umkehrsystem (erstes Prismensystem)
- 16B: zweites Umkehrsystem (zweites Prismensystem)
- 17A: erstes Okular
- 17B: zweites Okular
- 18A: erste Befestigungseinheit
- 18B: zweite Befestigungseinheit
- 19A: erste Kontrolleinheit
- 19B: zweite Kontrolleinheit
- 20A: erste Antriebseinheit
- 20B: zweite Antriebseinheit
- 21: erster Hall-Sensor
- 22: zweiter Hall-Sensor
- 23A: linke Zwischenbildebene
- 23B: rechte Zwischenbildebene
- 24: zweite Knickbrücke
- 25: drittes Scharnierteil
- 26: viertes Scharnierteil
- 27: dritte Knickbrücke
- 28: fünftes Scharnierteil
- 29: sechstes Scharnierteil
- 30: erster Achsbolzen
- 31: zweiter Achsbolzen
- 32: erste Steuereinheit
- 33: Permanentmagnet
- 34: Halteelement
- 35: zweite Steuereinheit (Schalter)
- 36: Laufelement
- 37: Führungselement
- 38: erster Stutzen
- 39: zweiter Stutzen
- 40: Gewindestange

- 51A: erste Fronteinheit
- 51B: zweite Fronteinheit
- 52A: erste Fokussiereinheit
- 52B: zweite Fokussiereinheit
- 53: Drehrad
- 54A: erste Aperturblende
- 54B: zweite Aperturblende
- 55A: erste Augenmuschel
- 55B: zweite Augenmuschel

- O: Objekt

## Patentansprüche

1. Fernglas (1) zur Abbildung eines Objekts (O),
- mit einem ersten optischen Teilsystem (12), welches in einem ersten Gehäuseteil (2) angeordnet ist,
- mit einem zweiten optischen Teilsystem (13), welches in einem zweiten Gehäuseteil (3) angeordnet ist,
- mit mindestens einer ersten Knickbrücke (4), welche das erste Gehäuseteil (2) mit dem zweiten Gehäuseteil (3) verbindet, wobei die erste Knickbrücke (4) mindestens ein an dem ersten Gehäuseteil (2) angeordnetes erstes Scharnierteil (5) aufweist, wobei die erste Knickbrücke (4) ein an dem zweiten Gehäuseteil (3) angeordnetes zweites Scharnierteil (6) aufweist, und wobei das erste Scharnierteil (5) an dem zweiten Scharnierteil (6) derart angeordnet ist, dass das erste Scharnierteil (5) und das zweite Scharnierteil (6) um eine erste Rotationsachse (7) drehbar angeordnet sind, wobei
- das erste optische Teilsystem (12) mindestens eine erste Fokussiereinheit (52A) aufweist,
- das zweite optische Teilsystem (13) mindestens eine zweite Fokussiereinheit (52B) aufweist,
- das erste optische Teilsystem (12) mindestens eine erste Antriebseinheit (20A) zur Bewegung der ersten Fokussiereinheit (52A) aufweist,
- das zweite optische Teilsystem (13) mindestens eine zweite Antriebseinheit (20B) zur Bewegung der zweiten Fokussiereinheit (52B) aufweist,
- das Fernglas (1) mindestens eine erste Steuereinheit (32, 53) zur Ansteuerung der ersten Antriebseinheit (20A) und/oder der zweiten Antriebseinheit (20B) aufweist, und wobei
- das Fernglas (1) mindestens eine zweite Knickbrücke (24) aufweist, welche das erste Gehäuseteil (2) mit dem zweiten Gehäuseteil (3) verbindet, wobei die zweite Knickbrücke (24) mindestens ein an dem ersten Gehäuseteil (2) angeordnetes drittes Scharnierteil (25) aufweist, die zweite Knickbrücke (24) mindestens ein an dem zweiten Gehäuseteil (3) angeordnetes viertes Scharnierteil (26) aufweist, und wobei das dritte Scharnierteil (25) an dem vierten Scharnierteil (26) derart angeordnet ist, dass das dritte Scharnierteil (25) und das vierte Scharnierteil (26) um die erste Rotationsachse (7) drehbar angeordnet sind,
- die erste Knickbrücke (4) und die zweite Knickbrücke (24) einen Zwischenraum bilden,
- die erste Steuereinheit (32) in dem Zwischenraum angeordnet ist,
- das erste optische Teilsystem (12) mindestens ein erstes Okular (17A) aufweist,
wobei
- die erste Steuereinheit (32, 53) elektromechanisch ausgebildet ist und eine mechanische Bewegung in ein erstes elektronisches Steuersignal umwandelt,
- die erste Fokussiereinheit (52A) als separate optische Einheit zum ersten Okular (17A) ausgebildet ist, so dass sich bei einer Fokussierung die erste Fokussiereinheit (52A), aber nicht das erste Okular (17A) bewegt.

2. Fernglas (1) nach Anspruch 1, **dadurch gekennzeichnet, dass**
- das erste optische Teilsystem (12) mindestens ein erstes Objektiv (14A) aufweist, und dass
- die erste Fokussiereinheit (52A) als separate optische Einheit zum ersten Objektiv (14A) ausgebildet ist, so dass sich bei einer Fokussierung die erste Fokussiereinheit (52A), aber nicht das erste Objektiv (14A) bewegt.

3. Fernglas (1) nach Anspruch 1 oder 2, **dadurch gekennzeichnet, dass** das Fernglas (1) mindestens eines der folgenden Merkmale aufweist:
- das zweite optische Teilsystem (13) weist mindestens ein zweites Okular (17B) auf, wobei die zweite Fokussiereinheit (52B) als separate optische Einheit zum zweiten Okular (17B) ausgebildet ist, so dass sich bei einer Fokussierung die zweite Fokussiereinheit (52B), aber nicht das zweite Okular (17B) bewegt;
- das zweite optische Teilsystem (13) weist mindestens ein zweites Objektiv (14B) auf, wobei die zweite Fokussiereinheit (52B) als separate optische Einheit zum zweiten Objektiv (14B) ausgebildet ist, so dass sich bei einer Fokussierung die zweite Fokussiereinheit (52B), aber nicht das zweite Objektiv (14B) bewegt.

4. Fernglas (1) nach einem der vorangehenden Ansprüche, **dadurch gekennzeichnet, dass** die erste Knickbrücke (4) und die zweite Knickbrücke (24) entlang der ersten Rotationsachse (7) beabstandet zueinander angeordnet sind.

5. Fernglas (1) nach Anspruch 4, **dadurch gekennzeichnet, dass** das Fernglas (1) eines der folgenden Merkmale aufweist:
- die erste Knickbrücke (4) und die zweite Knickbrücke (24) weisen einen Abstand im Bereich von 10 mm bis 40 mm zueinander auf;
- die erste Knickbrücke (4) und die zweite Knickbrücke (24) weisen einen Abstand im Bereich von 15 mm bis 35 mm zueinander auf; oder
- die erste Knickbrücke (4) und die zweite Knickbrücke (24) weisen einen Abstand im Bereich von 20 mm bis 30 mm zueinander auf.

6. Fernglas (1) nach einem der vorangehenden Ansprüche, **dadurch gekennzeichnet, dass** die erste Steuereinheit (32) mindestens einen ersten Hall-Sensor (21) umfasst.

7. Fernglas (1) nach einem der vorangehenden Ansprüche, **dadurch gekennzeichnet, dass** das Fernglas (1) mindestens eine zweite Steuereinheit (35) zur Ansteuerung der ersten Antriebseinheit (20A) und/oder der zweiten Antriebseinheit (20B) zur Einstellung eines relativen Abstands der ersten Fokussiereinheit (52A) zur zweiten Fokussiereinheit (52B) entlang der ersten Rotationsachse (7) aufweist.

8. Fernglas (1) nach Anspruch 7, **dadurch gekennzeichnet, dass** die zweite Steuereinheit (35) als Schaltelement zur Schaltung der ersten Steuereinheit (32) von einem ersten Steuerzustand in einen zweiten Steuerzustand ausgebildet ist.

9. Fernglas (1) nach Anspruch 7 oder 8, **dadurch gekennzeichnet, dass** die zweite Steuereinheit mindestens einen zweiten Hall-Sensor (22) umfasst.

10. Verfahren zum Betrieb eines Fernglases (1) nach einem der vorangehenden Ansprüche, **dadurch gekennzeichnet, dass**
- die erste Steuereinheit (32, 35) eine mechanische Bewegung in ein erstes elektronisches Steuersignal umwandelt,
- das erste elektronische Steuersignal der ersten Antriebseinheit (20A) zum Bewegen der ersten Fokussiereinheit (52A) und/oder der zweiten Antriebseinheit (20B) zum Bewegen der zweiten Fokussiereinheit (52B) zugeführt wird, so dass ein Fokussieren auf das Objekt (O) erfolgt.

11. Verfahren nach Anspruch 10, **dadurch gekennzeichnet, dass** die erste Fokussiereinheit (52A) und die zweite Fokussiereinheit (52B) gleichzeitig in eine vorgegebene Richtung bewegt werden.

12. Verfahren nach Anspruch 10 oder 11, **dadurch gekennzeichnet, dass**
- eine zweite Steuereinheit eine mechanische Bewegung in ein zweites elektronisches Steuersignal umwandelt, und dass
- das zweite elektronische Steuersignal der ersten Antriebseinheit (20A) und/oder der zweiten Antriebseinheit (20B) zugeführt wird, so dass der relative Abstand der ersten Fokussiereinheit (52A) zur zweiten Fokussiereinheit (52B) entlang der ersten Rotationsachse (7) eingestellt wird.

13. Verfahren nach Anspruch 10 oder 11, **dadurch gekennzeichnet, dass**
- mittels eines Schaltelements (35) die erste Steuereinheit (32) von einem ersten Steuerzustand in einen zweiten Steuerzustand geschaltet wird,
- im ersten Steuerzustand die erste Steuereinheit (32) die Fokussierung des Fernglases (1) auf ein abzubildendes Objekt (O) steuert, wobei das erste elektronische Steuersignal der ersten Antriebseinheit (20A) zum Bewegen der ersten Fokussiereinheit (52A) und/oder der zweiten Antriebseinheit (20B) zum Bewegen der zweiten Fokussiereinheit (52B) zugeführt wird,
- im zweiten Steuerzustand die erste Steuereinheit (32) eine mechanische Bewegung in ein zweites elektronisches Steuersignal umwandelt, und dass
- das zweite elektronische Steuersignal der ersten Antriebseinheit (20A) und/oder der zweiten Antriebseinheit (20B) zugeführt wird, so dass der relative Abstand der ersten Fokussiereinheit (52A) zur zweiten Fokussiereinheit (52B) entlang der ersten Rotationsachse (7) eingestellt wird.

## Claims

1. Pair of binoculars (1) for imaging an object (O),
- having a first optical subsystem (12) arranged in a first housing part (2),
- having a second optical subsystem (13) arranged in a second housing part (3),
- having at least one first folding bridge (4), which connects the first housing part (2) to the second housing part (3), wherein the first folding bridge (4) has at least one first hinge part (5) arranged at the first housing part (2), wherein the first folding bridge (4) has a second hinge part (6) arranged at the second housing part (3), and wherein the first hinge part (5) is arranged at the second hinge part (6) in a manner such that the first hinge part (5) and the second hinge part (6) are arranged so as to be rotatable about a first rotation axis (7),
wherein
- the first optical subsystem (12) has at least one first focusing unit (52A),
- the second optical subsystem (13) has at least one second focusing unit (52B),
- the first optical subsystem (12) has at least one first drive unit (20A) for moving the first focusing unit (52A),
- the second optical subsystem (13) has at least one second drive unit (20B) for moving the second focusing unit (52B),
- the pair of binoculars (1) has at least one first control unit (32, 53) for controlling the first drive unit (20A) and/or the second drive unit (20B), and wherein
- the pair of binoculars (1) has at least one second folding bridge (24), which connects the first housing part (2) to the second housing part (3), wherein the second folding bridge (24) has at least one third hinge part (25) arranged at the first housing part (2), the second folding bridge (24) has at least one fourth hinge part (26) arranged at the second housing part (3), and wherein the third hinge part (25) is arranged at the fourth hinge part (26) in a manner such that the third hinge part (25) and the fourth hinge part (26) are arranged so as to be rotatable about the first rotation axis (7),
- the first folding bridge (4) and the second folding bridge (24) form an intermediate space,
- the first control unit (32) is arranged in the intermediate space,
- the first optical subsystem (12) has at least one first eyepiece (17A),
wherein
- the first control unit (32, 53) has an electromechanical design and converts a mechanical movement into a first electronic control signal,
- the first focusing unit (52A) is designed as a separate optical unit from the first eyepiece (17A), with the result that the first focusing unit (52A) moves during focusing but not the first eyepiece (17A).

2. Pair of binoculars (1) according to Claim 1, **characterized in that**
- the first optical subsystem (12) has at least one first objective lens (14A), and **in that**
- the first focusing unit (52A) is designed as a separate optical unit from the first objective lens (14A), with the result that the first focusing unit (52A) moves during focusing but not the first objective lens (14A) .

3. Pair of binoculars (1) according to Claim 1 or 2, **characterized in that** the pair of binoculars (1) has at least one of the following features:
- the second optical subsystem (13) has at least one second eyepiece (17B), wherein the second focusing unit (52B) is designed as a separate optical unit from the second eyepiece (17B), with the result that the second focusing unit (52B) moves during focusing but not the second eyepiece (17B);
- the second optical subsystem (13) has at least one second objective lens (14B), wherein the second focusing unit (52B) is designed as a separate optical unit from the second objective lens (14B), with the result that the second focusing unit (52B) moves during focusing but not the second objective lens (14B).

4. Pair of binoculars (1) according to any of the preceding claims, **characterized in that** the first folding bridge (4) and the second folding bridge (24) are arranged so as to be spaced apart along the first rotation axis (7).

5. Pair of binoculars (1) according to Claim 4, **characterized in that** the pair of binoculars (1) has one of the following features:
- the first folding bridge (4) and the second folding bridge (24) have between them a distance in the range from 10 mm to 40 mm;
- the first folding bridge (4) and the second folding bridge (24) have between them a distance in the range from 15 mm to 35 mm; or
- the first folding bridge (4) and the second folding bridge (24) have between them a distance in the range from 20 mm to 30 mm.

6. Pair of binoculars (1) according to any of the preceding claims, **characterized in that** the first control unit (32) comprises at least one first Hall sensor (21).

7. Pair of binoculars (1) according to any of the preceding claims, **characterized in that** the pair of binoculars (1) has at least one second control unit (35) for controlling the first drive unit (20A) and/or the second drive unit (20B) for setting a relative distance between the first focusing unit (52A) and the second focusing unit (52B) along the first rotation axis (7).

8. Pair of binoculars (1) according to Claim 7, **characterized in that** the second control unit (35) is designed as a switching element for switching the first control unit (32) from a first control state into a second control state.

9. Pair of binoculars (1) according to Claim 7 or 8, **characterized in that** the second control unit comprises at least one second Hall sensor (22).

10. Method for operating a pair of binoculars (1) according to any of the preceding claims, **characterized in that**
- the first control unit (32, 35) converts a mechanical movement into a first electronic control signal,
- the first electronic control signal is supplied to the first drive unit (20A) for moving the first focusing unit (52A) and/or to the second drive unit (20B) for moving the second focusing unit (52B), such that focusing on the object (O) is effected.

11. Method according to Claim 10, **characterized in that** the first focusing unit (52A) and the second focusing unit (52B) are moved simultaneously into a specified direction.

12. Method according to Claim 10 or 11, **characterized in that**
- a second control unit converts a mechanical movement into a second electronic control signal, and **in that**
- the second electronic control signal is supplied to the first drive unit (20A) and/or to the second drive unit (20B) such that the relative distance between the first focusing unit (52A) and the second focusing unit (52B) along the first rotation axis (7) is set.

13. Method according to Claim 10 or 11, **characterized in that**
- the first control unit (32) is switched by means of a switching element (35) from a first control state into a second control state,
- in the first control state, the first control unit (32) controls the focusing of the pair of binoculars (1) at an object (O) to be imaged, wherein the first electronic control signal is supplied to the first drive unit (20A) for moving the first focusing unit (52A) and/or to the second drive unit (20B) for moving the second focusing unit (52B),
- in the second control state, the first control unit (32) converts a mechanical movement into a second electronic control signal, and **in that**
- the second electronic control signal is supplied to the first drive unit (20A) and/or to the second drive unit (20B) such that the relative distance between the first focusing unit (52A) and the second focusing unit (52B) along the first rotation axis (7) is set.

## Revendications

1. Jumelles (1) permettant de représenter un objet (O), comprenant
- un premier sous-système optique (12) qui est disposé dans une première partie de boîtier (2),
- un deuxième sous-système optique (13) qui est disposé dans une deuxième partie de boîtier (3),
- au moins un premier pont articulé (4) qui relie la première partie de boîtier (2) à la deuxième partie de boîtier (3), le premier pont articulé (4) présentant au moins une première partie de charnière (5) disposée sur la première partie de boîtier (2), le premier pont articulé (4) présentant une deuxième partie de charnière (6) disposée sur la deuxième partie de boîtier (3), et la première partie de charnière (5) étant disposée sur la deuxième partie de charnière (6) de telle sorte que la première partie de charnière (5) et la deuxième partie de charnière (6) sont disposées en rotation autour d'un premier axe de rotation (7),
dans lesquelles
- le premier sous-système optique (12) présente au moins une première unité de mise au point (52A),
- le deuxième sous-système optique (13) présente au moins une deuxième unité de mise au point (52B),
- le premier sous-système optique (12) présente au moins une première unité d'entraînement (20A) pour déplacer la première unité de mise au point (52A),
- le deuxième sous-système optique (13) présente au moins une deuxième unité d'entraînement (20B) pour déplacer la deuxième unité de mise au point (52B),
- les jumelles (1) présentent au moins une première unité de commande (32, 53) pour piloter la première unité d'entraînement (20A) et/ou la deuxième unité d'entraînement (20B), et dans lesquelles
- les jumelles (1) présentent au moins un deuxième pont articulé (24) qui relie la première partie de boîtier (2) à la deuxième partie de boîtier (3), le deuxième pont articulé (24) présentant au moins une troisième partie de charnière (25) disposée sur la première partie de boîtier (2), le deuxième pont articulé (24) présentant au moins une quatrième partie de charnière (26) disposée sur la deuxième partie de boîtier (3), et la troisième partie de charnière (25) étant disposée sur la quatrième partie de charnière (26) de telle sorte que la troisième partie de charnière (25) et la quatrième partie de charnière (26) sont disposées en rotation autour du premier axe de rotation (7),
- le premier pont articulé (4) et le deuxième pont articulé (24) forment un intervalle,
- la première unité de commande (32) est disposée dans l'intervalle,
- le premier sous-système optique (12) présente au moins un premier oculaire (17A),
dans lesquelles
- la première unité de commande (32, 53) est réalisée de manière électromécanique et convertit un mouvement mécanique en un premier signal de commande électronique,
- la première unité de mise au point (52A) est réalisée comme une unité optique séparée par rapport au premier oculaire (17A) de sorte que lors d'une mise au point, la première unité de mise au point (52A) se déplace, mais pas le premier oculaire (17A).

2. Jumelles (1) selon la revendication 1, **caractérisées en ce que**
- le premier sous-système optique (12) présente au moins un premier objectif (14A), et **en ce que**
- la première unité de mise au point (52A) est réalisée comme une unité optique séparée par rapport au premier objectif (14A) de sorte que lors d'une mise au point, la première unité de mise au point (52A) se déplace, mais pas le premier objectif (14A).

3. Jumelles (1) selon la revendication 1 ou 2, **caractérisées en ce que** les jumelles (1) présentent au moins l'une des caractéristiques suivantes :
- le deuxième sous-système optique (13) présente au moins un deuxième oculaire (17B), la deuxième unité de mise au point (52B) étant réalisée comme une unité optique séparée par rapport au deuxième oculaire (17B) de sorte que lors d'une mise au point, la deuxième unité de mise au point (52B) se déplace, mais pas le deuxième oculaire (17B) ;
- le deuxième sous-système optique (13) présente au moins un deuxième objectif (14B), la deuxième unité de mise au point (52B) étant réalisée comme une unité optique séparée par rapport au deuxième objectif (14B), de sorte que lors d'une mise au point, la deuxième unité de mise au point (52B) se déplace, mais pas le deuxième objectif (14B).

4. Jumelles (1) selon l'une quelconque des revendications précédentes, **caractérisées en ce que** le premier pont articulé (4) et le deuxième pont articulé (24) sont disposés le long du premier axe de rotation (7) à distance l'un de l'autre.

5. Jumelles (1) selon la revendication 4, **caractérisées en ce que** les jumelles (1) présentent l'une des particularités suivantes :
- le premier pont articulé (4) et le deuxième pont articulé (24) présentent une distance l'un par rapport à l'autre dans la plage de 10 mm à 40 mm ;
- le premier pont articulé (4) et le deuxième pont articulé (24) présentent une distance l'un par rapport à l'autre dans la plage de 15 mm à 35 mm ; ou
- le premier pont articulé (4) et le deuxième pont articulé (24) présentent une distance l'un par rapport à l'autre dans la plage de 20 mm à 30 mm.

6. Jumelles (1) selon l'une quelconque des revendications précédentes, **caractérisées en ce que** la première unité de commande (32) comprend au moins un premier capteur à effet Hall (21).

7. Jumelles (1) selon l'une quelconque des revendications précédentes, **caractérisées en ce que** les jumelles (1) présentent au moins une deuxième unité de commande (35) pour piloter la première unité d'entraînement (20A) et/ou la deuxième unité d'entraînement (20B) afin de régler une distance relative de la première unité de mise au point (52A) par rapport à la deuxième unité de mise au point (52B) le long du premier axe de rotation (7).

8. Jumelles (1) selon la revendication 7, **caractérisées en ce que** la deuxième unité de commande (35) est réalisée sous forme d'élément de commutation pour commuter la première unité de commande (32) d'un premier état de commande à un deuxième état de commande.

9. Jumelles (1) selon la revendication 7 ou 8, **caractérisées en ce que** la deuxième unité de commande comprend au moins un deuxième capteur à effet Hall (22).

10. Procédé permettant de faire fonctionner des jumelles (1) selon l'une quelconque des revendications précédentes, **caractérisé en ce que**
- la première unité de commande (32, 35) convertit un mouvement mécanique en un premier signal de commande électronique,
- le premier signal de commande électronique est amené à la première unité d'entraînement (20A) pour déplacer la première unité de mise au point (52A) et/ou à la deuxième unité d'entraînement (20B) pour déplacer la deuxième unité de mise au point (52B) de façon à effectuer une mise au point sur l'objet (O).

11. Procédé selon la revendication 10, **caractérisé en ce que** la première unité de mise au point (52A) et la deuxième unité de mise au point (52B) sont déplacées en même temps dans une direction prédéfinie.

12. Procédé selon la revendication 10 ou 11, **caractérisé en ce que**
- une deuxième unité de commande convertit un mouvement mécanique en un deuxième signal de commande électronique, et **en ce que**
- le deuxième signal de commande électronique est amené à la première unité d'entraînement (20A) et/ou à la deuxième unité d'entraînement (20B) de façon à régler la distance relative de la première unité de mise au point (52A) par rapport à la deuxième unité de mise au point (52B) le long du premier axe de rotation (7).

13. Procédé selon la revendication 10 ou 11, **caractérisé en ce que**
- un élément de commutation (35) permet de commuter la première unité de commande (32) d'un premier état de commande à un deuxième état de commande,
- dans le premier état de commande, la première unité de commande (32) commande la mise au point des jumelles (1) sur un objet (O) à représenter, le premier signal de commande électronique étant amené à la première unité d'entraînement (20A) pour déplacer la première unité de mise au point (52A) et/ou à la deuxième unité d'entraînement (20B) pour déplacer la deuxième unité de mise au point (52B),
- dans le deuxième état de commande, la première unité de commande (32) convertit un mouvement mécanique en un deuxième signal de commande électronique, et **en ce que**
- le deuxième signal de commande électronique est amené à la première unité d'entraînement (20A) et/ou à la deuxième unité d'entraînement (20B) de façon à régler la distance relative de la première unité de mise au point (52A) par rapport à la deuxième unité de mise au point (52B) le long du premier axe de rotation (7).
